# EUROPEAN PATENT APPLICATION

(11) **EP 1 980 316 A1**
(43) Date of publication of application: **15.10.2008**
(21) Application number: 08153023.0
(22) Date of filing: 19.03.2008
(51) Int. Cl.: B01J 19/00, B01L 3/00

(54) **Controlling and moderating microwave energy in high-throughput chemical processes**

(30) Priority: 03.04.2007 US 695641
(71) Applicant: CEM Corporation, Matthews, NC 28106-0200 (US)
(72) Inventor: Lambert, Joseph, Charlotte, NC NC 28270 (US); Vanier, Grace S., Indian Trail, NC NC 28079 (US); Collins, Jonathan M., Charlotte, NC NC 28277 (US); Collins, Michael, Charlotte, NC NC 28277 (US)
(74) Representative: Lane, Cathal Michael

(57) **Abstract**

A system for microwave assisted high-throughput chemical processes is disclosed. The system includes a source of microwave radiation (63,64), a microwave cavity (65) in communication with the source, and a microtiter plate (66) in the cavity. The microtiter plate (66) is formed of a microwave transparent material and includes a plurality of sample wells (67). A fluid chamber is defined by the interior of the four walls, the base, the profiles of the wells, and by the top surface of the microtiter plate (66). A microwave-moderating fluid in the chamber helps produce a more uniform microwave field among the individual wells in the microtiter plate (66) when microwaves are applied in the cavity (65) from the source (63,64).
The microtiter plate may be cooled during the application of microwaves by either flowing a cooling gas (72) or by contact cooling (73).

## Description

### Background

The present invention relates to microwave assisted chemistry in conjunction with multiple sample techniques using small volume multiple well sample plates. In particular, the invention relates to the use of microwaves to initiate, accelerate, or control concurrent multiple processes or reactions in the bioscience field.

Microwave assisted chemistry refers to the application of microwaves to chemical compositions to initiate, accelerate, or otherwise favorably affect or control chemical reactions. As initially developed, microwave assisted chemistry was typically used for robust applications such as digestion, loss-on-drying, and extraction. In these techniques-which continue to be commercially significant-the microwaves couple with an appropriate sample materials or solvents to produce relatively rapid heating that accelerates the process of interest. Such applications also frequently generate high pressures and are carried out in appropriate sealed vessels. Because microwaves interact directly with many compositions (particularly polar molecules) this heating takes place very rapidly and in most cases much quicker than in other heating techniques, such as those that rely upon conduction or convection.

More recently, microwave assisted chemistry has been applied to smaller and more sophisticated reactions including peptide synthesis (e.g., United States Patent Application Publication No. 20040260059); organic synthesis (e.g. United States Patent Application Publication No. 20060039838); and hydrogenation (e.g., Serial No. 11/370,139 filed March 7, 2006 for "Microwave Assisted Hydrogenation Instrument and Methods").

A number of other types of reactions are often carried out on a small scale and are candidates for microwave acceleration, particularly in the area of the biosciences. These include (but are not limited to) enzymatic digestion, diagnostic testing, drug candidate assays, antibody and antigen reactions, cell-based assays, and blood chemistry diagnosis. Such reactions are typically (but not exclusively) carried out at temperatures between about body temperature (i.e., 37° C; 98.6° F) and about 50° - 60° C (122° - 140° F). The compositions of interest can also be relatively fragile and will often decompose or denature at excessive temperatures outside of this range.

Microwave assisted chemistry has, however, been less rapidly adopted for concurrent multiple heating of very small samples. Microwaves have relatively large wavelengths (between about 1 millimeter and 1 meter). As a result, in smaller (e.g. bench top) applications, the microwaves propagated into a cavity tend to produce a plurality of discrete modes, and thus can heat samples unevenly. In robust chemical reactions and food preparation, for example, this is addressed by simply changing the orientation of the sample periodically with respect to the microwave source. The most common technique for doing so, both in microwave chemistry instruments and in domestic microwave ovens, is to simply rotate the item of interest on a turntable in the microwave cavity.

The recent growth of high-throughput techniques such as combinatorial chemistry and parallel synthesis has driven interest in accelerating multiple small reactions in the same manner as multiple larger reactions (wherein the term "large" refers to the amount of sample and the size of the vessel).

A common-although not necessarily exclusive-format for many (but not all) parallel or concurrent processes is the 96 well microtiter plate (or "microplate"). Many commercially available microtiter plates meet the requirements for the Society for Biomolecular Sciences (SBS) standard footprint. Society for Biomolecular Sciences, Published Standards, January 9, 2004, http://www.sbsonline.org/msdc/approved.php (accessed March 6, 2007).

The standards set forth the exact dimensions and tolerances for microplates. Expressed more generally, a standard microtiter plate is approximately 5 inches (128 millimeters) long, approximately 3.4 inches (85 mm) wide, approximately 0.6 inches (14.4 mm) high, and contains 96 wells arranged in 12 rows of eight wells each (the exact dimensions being given in the SBS Standards). Each well typically holds between about 0.2 and 2.5 milliliters (ml) depending upon its shape. Because this is a useful size and format, many robotic tools (which add to the speed and precision of high-throughput techniques) are designed to handle the standard 96 well plate (or in some cases are limited to handling 96 well plates).

As further background, some high-throughput techniques are carried out in 384 well plates, and some in 1536 well plates, both of which are also widely commercially available.

Accordingly, using microwave energy to initiate or accelerate reactions in a 96 well (or other dimension) microplate could add to the speed and efficiency of a number of combinatorial, parallel synthesis or other high-throughput processes.

As set forth above, however, certain aspects of microwave radiation make it difficult to apply microwaves evenly to individual small samples. In turn, this difficulty is compounded for multiple small samples arranged in a specific geometric pattern that is designed for other purposes (e.g., high throughput robotic handling) rather than for microwave-assisted chemistry. In particular, uneven microwave heating can frustrate the purpose of combinatorial chemistry or parallel synthesis by exposing individual samples in a given library to different, rather than identical, reaction conditions. Efforts to incorporate microwave chemistry into high-throughput, parallel, or combinatorial processes have to date been less successful than hoped. E.g., Barer, The impact of different fixation procedures on staining of macromolecules in a microtiter system, Histochemical Journal 19, 671-675 (1987).

Prior attempts include incorporating individual antennas in individual sample wells (United States Patent Application Publication No. 20040173604); the use of microwave-absorbing material as susceptors in close proximity to a microtiter plate (United States Patent Application Publication Nos. 20040209303 and 20050232820), microtiter plates with peripheral heat reservoirs (U.S. Patent No. 6,676,905) or microtiter plates with built in heating systems (U.S. Patent No. 6,940,055). Some workers report successful protein assay in microtiter plates in standard microwave ovens (United States Patent No. 5,478,748) but the reported success has not been commercially reproducible. Microwave techniques using microtiter plates have also been attempted for DNA amplification (United States Patent Application Publication No. 20050112581; and Sandford, Direct PCR of Small Genomic DNA Fragments from Serum, Biotechniques 23:890-892 (November 1997)) and for ELISA incubation, van Dorp, *ELISA Incubation Times Can be Reduced by2.45 GHz Microwaves,* J. Clin. Lab. Immunol (1991) 34, 87-96.

Accordingly, although the speed of microwave assisted chemistry is otherwise appealing with respect to high-throughput, or parallel processes, there remains a practical need for applying microwaves appropriately to multiple small samples (such as 96 well microtiter plates) of relatively fragile compositions at controlled moderate temperatures.

### Summary

In one aspect, the invention is a system for microwave assisted high-throughput chemical processes. The system includes a source of microwave radiation, a microwave cavity in communication with the source, and a microtiter plate in the cavity. The microtiter plate is formed of a microwave transparent material and includes a plurality of sample wells. A fluid chamber is defined by the interior of the four walls, the base, the profiles of the wells, and by the top surface of the microtiter plate. A microwave-moderating fluid in the chamber helps produce a more uniform microwave field among the individual wells in the microtiter plate when microwaves are applied in the cavity from the source. Further advantageous aspects of the system of the invention are set out below and in the claims.

In another aspect, the invention is a method of microwave assisted high-throughput chemistry. The method includes the steps of applying microwave energy to a plurality of compositions in a plurality of sample wells in a multiple well plate, while moderating the microwaves by circulating a liquid in a portion of the plate that is beneath the wells and segregated from the compositions in the wells and that couples differently than the compositions in the wells couple with the applied microwave frequencies. Further advantageous aspects of the method of the invention are set out below and in the claims.

In yet another aspect, the invention is a microtiter plate for high throughput microwave assisted chemistry. The microtiter plate includes a base that defines the area footprint of the plate, four contiguous walls generally perpendicular to the base that define the height of the plate, a top surface extending over and parallel to the base at the top of the four walls, and at least 96 sample wells extending from the top surface toward the base. The base, walls, top surface and wells are formed of materials that are substantially transparent to microwave radiation. A fluid chamber is defined by the interior of the four walls, by the base, by the profiles of the wells, and by the top surface. A fluid is present in the chamber that will moderate electromagnetic radiation in the microwave frequencies. Further advantageous aspects of the microtiter plate of the invention are set out below and in the claims.

In particular the invention provides for a microtiter plate for high throughput microwave assisted chemistry; said microtiter plate comprising:
a base that defines the area footprint of said plate;
four contiguous walls generally perpendicular to said base that define the height of said plate;
a top surface extending over and parallel to said base at the top of said four walls;
at least 96 sample wells extending from said top surface toward said base;
said base, said walls, said top surface and said wells being formed of materials that are substantially transparent to microwave radiation; and
a fluid chamber defined by at least the interior of said four walls and said base.

Said microtiter plate may comprise a fluid in said chamber that will moderate electromagnetic radiation in the microwave frequencies. Desirably, said fluid will moderate microwaves having a frequency of between about 300 megahertz and 3 gigahertz, more particularly said fluid will moderate microwaves having a frequency of 2450 megahertz. Desirably said microwave-moderating fluid is water or is an aqueous ionic solution.

In one embodiment the microtiter plate is formed of a material selected from the group consisting of: polypropylene, polystyrene, polycarbonate, polyester, glass, and polymers coated with glass. Furthermore, it is desirable that said base and said wells of the microtiter plate of the present invention are consistent with ANSI/SBS standards for 96 well plates. Suitably, said 96 wells can be arranged in eight rows of 12 wells each. In addition, the invention provides for microtiter plates comprising at least 384 wells, or at least 1536 wells.

The base of the microtiter plate may define a rectangle and said fluid chamber of the microtiter plate may be defined by the interior of said four walls, said base, the profiles of said wells, and by said top surface.

The foregoing and other objects and advantages of the invention and the manner in which the same are accomplished will become clearer based on the followed detailed description taken in conjunction with the accompanying drawings.

### Brief Description of the Drawings

Figure 1 is a top plan view of a standard microtiter plate in accordance with ANSI/SBS standards.

Figure 2 is a side elevation view of the microtiter plate of Figure 1.

Figure 3 is a cross-sectional view of a segment of the microtiter plate of Figure 1.

Figure 4 is a perspective view of the exterior of a microwave instrument according to the present invention.

Figure 5 is an exploded perspective view of a microtiter plate according to the present invention.

Figure 6 is a cross-sectional view taken along lines 6-6 of Figure 5.

Figure 7 is a cross-sectional view taken along lines 7-7 of Figure 5.

Figure 8 is a schematic diagram of the operational elements of the invention.

Figure 9 is a thermal image of a microtiter plate exposed to microwave radiation without the microwave moderating fluid.

Figures 10 through 17 are thermal images of microtiter plates that include the microwave moderating fluid and that have been exposed to microwave radiation.

### Detailed Description

The invention is a system and associated method for microwave assisted high throughput chemical processes. The invention is particularly useful in terms of multiple well plates and thus much of the description herein will be in terms of such plates, including the standard 96-well plate referred to in the background.

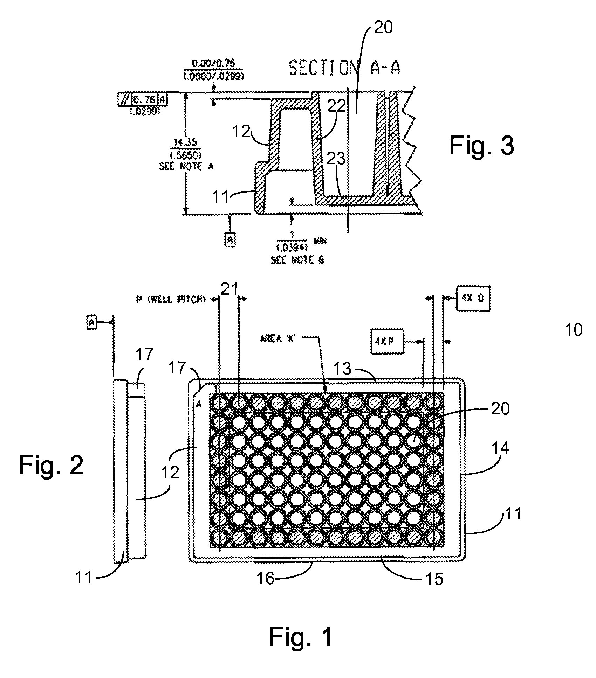

Figures 1, 2 and 3 illustrate a standard microtiter plate according to (and taken from) ANSI/SBS specifications. Thus, in one sense Figures 1-3 represent aspects of the prior art. Nevertheless, because the invention also incorporates certain of the standards, Figures 1-3 are also useful in illustrating aspects of the invention. It will be understood, however, that the invention is not limited to microtiter plates that meet the ANSI/SBS specifications.

Accordingly, Figure 1 shows a standard 96 well microtiter plate broadly designated at 10. The microtiter plate includes a base 11 which defines the footprint of the plate 10. As set forth in the Background, the exact standards and tolerances for a 96 well plate are described in the ANSI/SBS standards and will not be otherwise repeated here in detail. Four perimeter walls 12, 13, 14, and 15 define the height of a typical plate, although the plates of the invention may be taller for reasons described later herein.

In the illustrated embodiment the portion of the base 11 between the walls 12-15 and the outer perimeter of the base 11 defines a flange 16. The flange and the walls together can define a chamfer (corner notch) 17, but such a corner notch is optional with respect to the ANSI/SBS standards.

The microtiter plate 10 includes 96 wells one of which is illustrated in cross-section at 20 in Figure 3. In a standard microtiter plate, the wells 20 are laid out in eight rows and 12 columns with a defined distance between the outside edges of the plate and the position of the wells 20. The distance between the wells (the pitch) is defined by the ANSI/SBS standards and illustrated by the dimension 21 in Figure 1. Similar ANSI/SBS standards also exist for 384 well microplates and 1536 well microplates.

Figure 3 illustrates the wells 20 as being generally cylindrical with slightly angled walls 22 that define the mouth of the well 20 to be slightly larger than the floor 23. Neither the ANSI/SBS standard microtiter plate nor the invention, however, is limited to this particular shape.

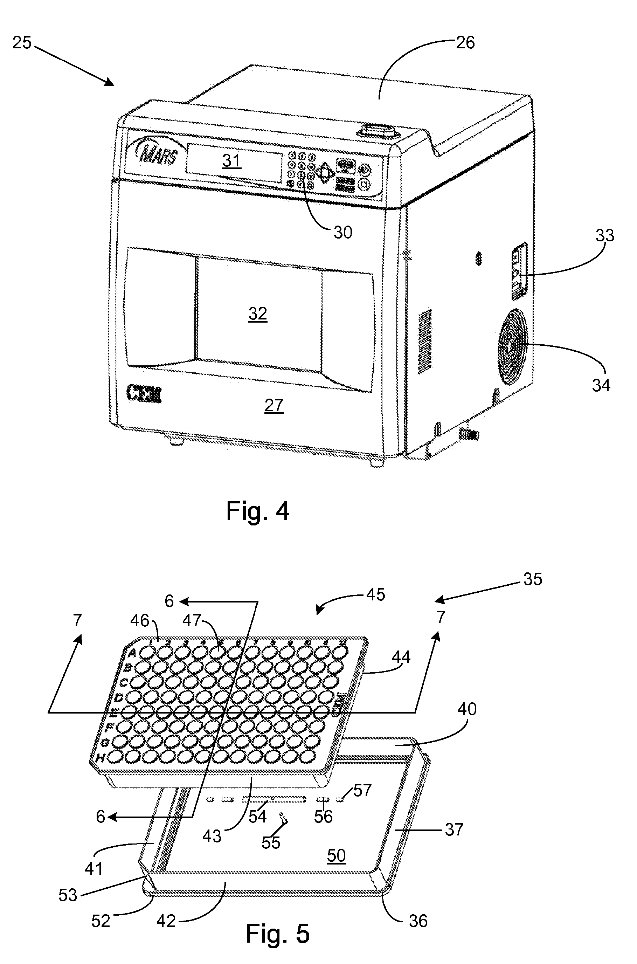

Figure 4 is a perspective view of the exterior of a commercial instrument according to the present invention and broadly designated at 25. In exemplary embodiments, instruments according to the invention can be well-understood multimode instruments such as the MARS™ instrument available from CEM Corporation of Matthews North Carolina USA. The basic features and operation of these instruments can be used by those of skill in this art to practice the invention without undue experimentation. In brief, such an instrument often includes a magnetron as the microwave source, metal walls and a floor that define a microwave cavity (frequently in the shape of a solid rectangle), and a waveguide between the magnetron and the cavity.

Figure 4 illustrates that the instrument 25 includes a housing 26 and a door 27 which typically opens into the microwave cavity (not visible in Figure 4). Because as described later herein the instrument 25 can incorporate a processor, it will also typically include a control panel 30 and an output display 31. Although the display 31 can provide relevant information, the instrument 25 will also typically be compatible with digital input and output so that the results, measurements, or controls, can be handled with a computer, with the processing power and memory of a typical personal computer being appropriate for most purposes.

The display 31 can be as basic as light emitting diodes or liquid crystals, or can include more sophisticated displays that include color and that are the same as or entirely analogous to those in small electronic devices such as cellular phones or personal digital assistants.

Figure 4 also illustrates that the door 27 can include a window 32, an on-off switch 33 and a housing fan 34 for cooling the electronic equipment (in addition to the reaction cooling described later herein).

Figures 5, 6 and 7 illustrate aspects of the invention in terms of a microtiter plate. Figure 5 is an exploded perspective view in which the microtiter plate is broadly designated at 35. The plate includes a base 36 that defines the area footprint of the plate, and in exemplary embodiments, is consistent with the ANSI/SBS standards. The plate 35 includes four contiguous walls 37, 40, 41 and 42 generally perpendicular to the base 36 and that define the height of the plate 35. In the illustrated embodiment, a corresponding set of walls, two of which are shown at 43 and 44, are on an upper portion of the plate that is broadly designated at 45.

The upper portion 45 of the plate 35 includes a top surface 46 that extends over and parallel to the base 36 at the top of the respective walls 37-44. At least 96 sample wells 47 extend from the top surface 46 toward the base 36.

The base 36, the walls 37-44, the top surface 46, and the wells 47 are formed of materials that are substantially transparent to microwave radiation. Typical materials include, but are not limited to, polypropylene, polystyrene, polycarbonate, polyester, glass, and polymers coated with glass (for example 200 nanometer thick coatings of silicon dioxide on one of these polymers).

In the illustrated embodiment, the four walls 37, 40, 41 and 42, the base 36 and the profiles of the wells 47 together with the top surface 46 define a fluid chamber 50. In other embodiments, another wall can be added (e.g. below the wells 47 and parallel to the base 36) to define the fluid chamber as a solid rectangle or other shape. In use, the fluid chamber 50 contains a fluid (not illustrated) that will moderate electromagnetic radiation in the microwave frequencies. As set forth earlier, microwave frequencies are generally described as having wavelengths between one millimeter (1 mm) and one meter (1 m) and frequencies of between about 300 megahertz (MHz) and 300 gigahertz GHz). Because most governments regulate and divide portions of the electromagnetic spectrum into different frequency groups for different uses, most microwave instrumentation of the type incorporated in the invention will generate microwaves with frequencies of between about three megahertz and three gigahertz, with the region surrounding the frequency of 2450 megahertz being specifically allocated for laboratory and domestic microwave instruments. Accordingly, in exemplary embodiments, the fluid in the chamber 50 is selected to moderate microwaves in these frequencies.

In exemplary embodiments, the microwave moderating fluid in the chamber 50 is either water or an ionic solution, although any other fluid (including less polar liquids) that moderates the microwaves of the applied frequencies in the desired manner and without otherwise interfering with the composition or operation of the microtiter plate or the reactions carried out in the wells is acceptable. Depending upon the particular compositions and processes, the fluid chamber 50 can be partially or totally filled with the microwave-moderating fluid, and the wells 47 may or may not come into physical contact with the microwave moderating fluid.

Figure 5 illustrates that the microtiter plate 35 is consistent with standards for 96 well plates, including the use of eight rows of 12 wells each in the defined rectangular shape of the base 36. Because the invention, however, relates to the interaction of microwaves with materials, it is not necessarily limited to the number of wells in a standardized plate, but instead should be considered particularly useful with such standard plates, including 384 well plates, and 1536 well plates.

Other details of the microtiter plate 35 are consistent with the ANSI/SBS standards including the flange 52 defined between the base 36 and the walls, and the corner notch 53.

Figure 5 also illustrates that the microtiter plate 35 can include a magnetic stirrer bar 54 that can help circulate the fluid in the chamber 50. The bar 54 rotates on an axle 55 that extends perpendicularly upwardly from the base 36. The stirrer bar 54 is typically formed of a hollow tube of a generally inert polymer such as the fluorinated polymers; e.g., polytetrafluoroethylene (PTFE), the most familiar commercial designation of which is TEFLON®. A small magnet 56 is positioned in each end of the bar 54 and is held in place by the respective caps 57.

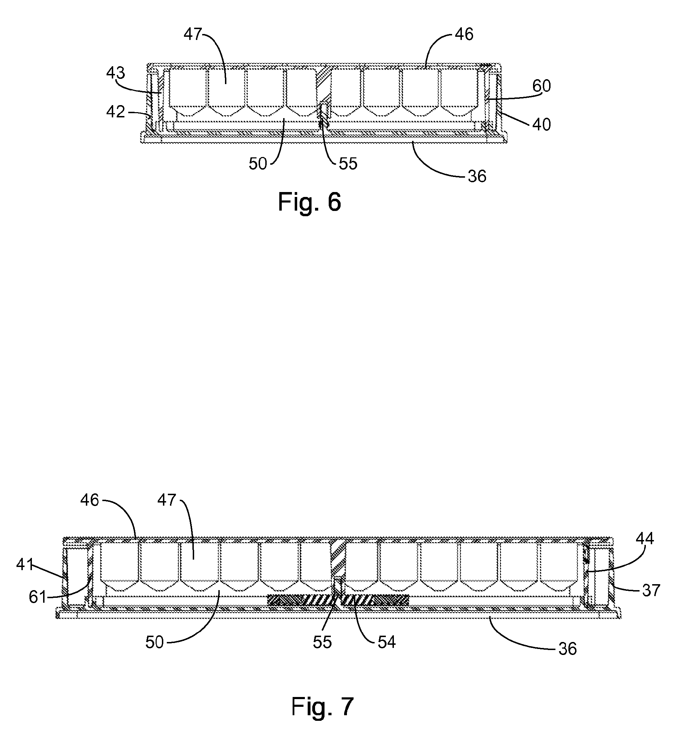

Figures 6 and 7 are cross-sectional views illustrating some of the same features as Figure 5. These include the base 36, the walls 37-42 and 43 and 44, and the top surface 46.

Figure 6 is taken along the cross-section that shows eight (8) of the wells 47 and Figure 7 is taken along the section that shows 12 of the wells 47. The magnetic stirrer bar 54 and the axle 55 are both illustrated in Figures 6 and 7.

Figure 6 illustrates a wall 60 that was not visible in the perspective view of Figure 5, and Figure 7 likewise illustrates another wall 61 that was not visible in the perspective view of Figure 5. The fluid chamber 50 is indicated with an arrow in Figures 6 and 7, and these figures particularly illustrate that the geometry of the fluid chamber 50 is defined by the walls 43, 44, 60 and 61, taken with the base 36 and the top surface 46, and including the geometry established by the downwardly depending wells 47. In exemplary embodiments, the entire base 36 (or at least a substantial portion of the base 36) defines the length and width dimensions of the fluid chamber 50.

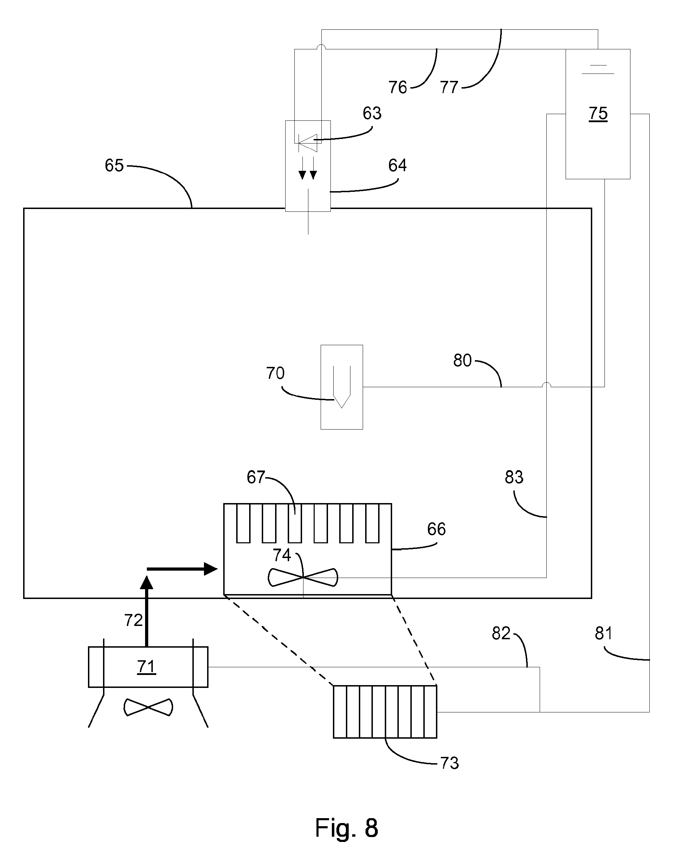

Figure 8 is a schematic diagram of some of the operational features of the invention. Figure 8 illustrates a source of microwave radiation shown as the diode 63 and the waveguide 64. The waveguide 64 provides communication between the source diode 63 and a microwave cavity schematically designated by the rectangle 65. Although schematically illustrated as a diode, the microwave source 63 can be any appropriate source that generates the desired or regulated microwave frequencies. Magnetrons are commonly used for their combination of cost, performance and efficiency, and klystrons are also used in some circumstances.

Figure 8 illustrates the microtiter plate at 66 which as set forth earlier is formed of a microwave transparent material and includes a plurality of sample wells 67. The wells 67 are immersed in the microwave moderating fluid (not shown) that produces a substantially uniform microwave field among the individual wells 67 in the microtiter plate 66 when microwaves are applied into the cavity 65 from the source 63.

A thermometer or other appropriate temperature detector 70 is positioned to monitor the temperature of the compositions in the wells, or of the microwave moderating fluid in the plate 66, or both. The system includes means for proactively cooling the microtiter plate 66 during the application of microwaves. Figure 8 schematically illustrates this as either the fan system 71 that directs a flow of cooling gas 72 across and against the microtiter plate 66 in the cavity 65; or as a contact cooling device such as the Peltier cooler 73. Because a Peltier (thermoelectric) device cools by conductive contact, it is normally positioned in the cavity 65 and immediately adjacent the plate 66. For purposes of clarity, however, Figure 8 illustrates the Peltier cooler 73 in breakaway fashion as indicated by the dotted lines.

As noted earlier herein, a number of the relevant reactions in the field of bioscience are preferably (or necessarily) carried out at temperatures of between about 37° and 60° C. When desired or necessary, the cooling system provides the means for maintaining the temperature within that range or (or another desired or necessary temperature range).

The system includes the means, shown as the stirrer 74 for circulating the microwave moderating fluid around the wells 67. As set forth earlier, a magnetic stirrer is entirely appropriate for this purpose.

Figure 8 also illustrates that the system typically includes a processor (CPU) that can enhance the monitoring and control functions of the invention. Generally speaking, the controls described herein can be carried out with a processor generally equivalent to that found in a personal computer and can be programmed for this purpose by those persons skilled in this art and without undue experimentation.

The use of processors and related electronic circuits to control instruments based on selected measured parameters (e.g., temperature and pressure) is generally well understood in this and related arts. Exemplary (but not limiting) discussions include Dorf, THE ELECTRICAL ENGINEERING HANDBOOK, SECOND ED., (1997) CRC Press LLC.

The processor 75 is in signal communication with a number of the other elements of the system. The processor 75 can control the microwave source 63 through the wires 76 and 77. Of course, although schematically illustrated as wires or lines, such control and communication can be part of an integrated circuit or in some cases can be carried out using wireless technology.

The processor 75 is also in communication with the temperature monitor 70 (typically an infrared or optical fiber temperature monitor) through the lines 80. In this manner, the processor 75 can moderate the source 63 in response to the monitored temperature from the detector 70 and in turn moderate the application of microwaves in the cavity 65.

The processor 75 is also in contact with the cooling instrument 71 or 73 through the wires 81 and 82 in order to help moderate the temperature in the cavity 65 with cooling instead of or in addition to moderating the application of microwaves from the source 63. For some of the same purposes, the processor 75 is in communication with a magnetic stirrer 74 from the line 83 so that the stirrer can be controlled as desired or necessary by the processor in response to commands from the processor 75 or in response to the temperature measured by the detector 70.

In another aspect, the invention is a method of microwave assisted high-throughput chemistry that includes the steps of applying microwave energy to a plurality of compositions in a plurality of sample wells in a multiple well plate while moderating the microwaves by circulating a liquid in the plate that is beneath the wells but segregated from the compositions in the wells. In exemplary embodiments, the moderating fluid couples less efficiently with the applied microwave frequencies than do the compositions in the wells. The method can also include the step of controlling the temperature of the circulating liquid or of the compositions in the wells, or both. Typically, but not exclusively, the temperature is controlled to prevent either the liquid in the chamber or the compositions in the wells from overheating. As set forth earlier, the instrument and method can provide controlled temperatures, including temperatures in the range of 35° - 60° C.

As set forth with respect to the system aspects of the invention, the step of controlling the temperature can comprise monitoring the temperature of the circulating fluid or of the compositions in the wells and moderating the application of microwave energy in response to the monitored temperatures.

The step of circulating the liquid in the cavity can also include the step of filling a chamber in a multiple well plate with the fluid and then applying the microwave energy to the compositions in the sample wells in a multiple well plate. It will be understood that the moderating fluid can be added to the plate either before or after the compositions are added to the wells, depending upon the relevant circumstances.

### Experimental

The following experiments were conducted using a 96 well prototype plate according to the present invention. Other than where exceptions are noted, the plates and wells were consistent with the ANSI/SBS standards. In each experiment one hundred micro liters (100 µl) of tap water or designated solution were placed in each well and microwave radiation was applied at a power of 300 watts with a two-minute ramp and a 50° centigrade limit as measured by a fiber optic probe in the instrument. Each experimental set was held at one minute. In Examples 2-4, the wells were positioned in a 150 milliliter of the microwave moderating liquid and the liquid was agitated with a small magnetic stirrer bar. A fiber optic probe measured the temperature of the microwave moderating liquid.

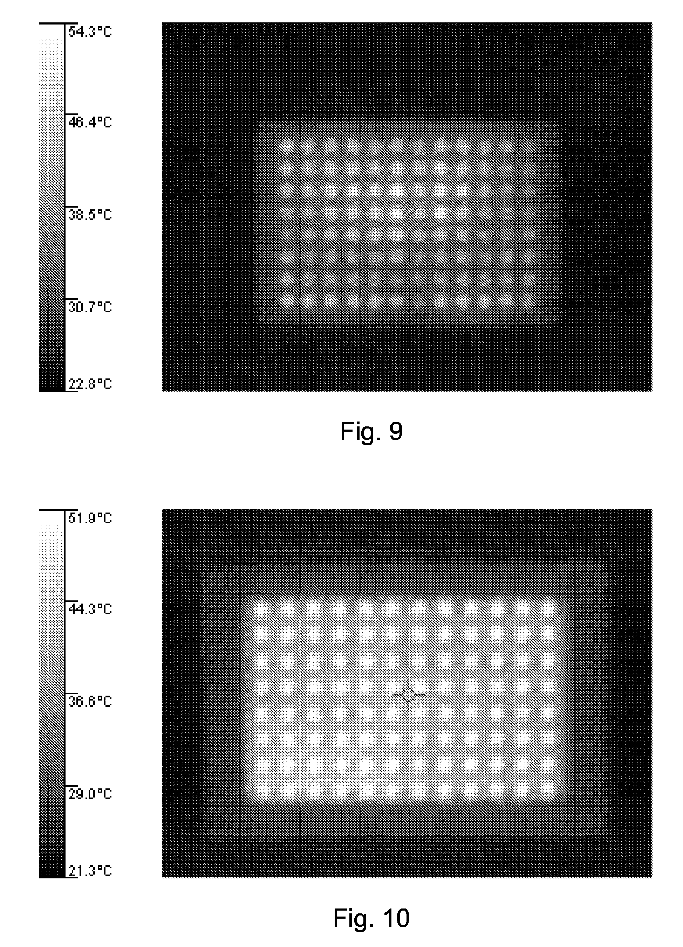

In order to measure the results across a plurality of wells, microwaves were applied until at least one probe in one well reached 50° C. At that point the application of microwaves was stopped, the plate was removed from the instrument, and the plate was photographed with an infrared detector that produced an image based on the observed temperature, as well as the temperature reading itself. Figures 9 through 17 represent the resulting thermal images for Examples 1 through 9 below. Each of Figures 9-17 includes a shading scale along the vertical axis in which the shade is proportional to the observed temperature.

Example 1:

Figure 9 is a thermal image of a 96 well microtiter plate of the type used in the present invention. In this experiment, the well contents were heated without any microwave-moderating liquid. As indicated by the scale along the vertical axis, the temperature in each well produces a different shade to the infrared detector.

Table 1 presents the same data as Figure 9 in terms of the temperatures recorded for each well. The rows and columns presented are oriented the same as the rows and columns of the plate illustrated in Figure 9. The same orientations apply to Figures 10-12.

**Table 1**

| *Position* | 1 | 2 | 3 | 4 | 5 | 6 | 7 | 8 | 9 | 10 | 11 | 12 |
|---|---|---|---|---|---|---|---|---|---|---|---|---|
| A | 45.5 | 42.4 | 43.3 | 44.5 | 41.6 | 43.6 | 40.4 | 44.2 | 43.7 | 41 | 40.5 | 36.5 |
| B | 45 | 43.2 | 45.9 | 46.4 | 46.3 | 48.9 | 44.1 | 48.5 | 45.5 | 41.5 | 39.6 | 36.2 |
| C | 42.8 | 43.2 | 47.7 | 49.1 | 47.6 | 54.1 | 45.2 | 51.1 | 47 | 41.4 | 38.2 | 35.5 |
| D | 39.5 | 41.5 | 45.4 | 47.9 | 48.4 | 54.3 | 45 | 52.1 | 45.7 | 39.8 | 37.3 | 35.1 |
| E | 37.7 | 39.1 | 42.1 | 44.6 | 45.7 | 49 | 42.1 | 44.2 | 42.3 | 38.4 | 37.8 | 36.5 |
| F | 39.5 | 38.3 | 38.7 | 39.7 | 40.1 | 41.1 | 38.6 | 39.2 | 39.4 | 37.7 | 38.8 | 38.2 |
| G | 42.4 | 38.3 | 39.4 | 38.8 | 37.7 | 36.9 | 36.3 | 39 | 39.9 | 37.6 | 38.6 | 38.7 |
| H | 44.9 | 43.5 | 44.5 | 44.1 | 42.7 | 40.6 | 36.5 | 43.9 | 44.4 | 42.9 | 42.8 | 38.9 |

As Figure 9 and Table 1 indicate, the average temperature in the wells was 42.2° C, and the difference in temperature extremes was 19.2° C. Expressed statistically, this represents a standard deviation of 4.16° C which in turn represents almost 10 % of the average temperature.

Example 2:

Figure 10 represents the infrared image under the same conditions, but using 150 milliliters of de-ionized water as the microwave moderating fluid. Table 2 provides the data in numerical format and shows that the average temperature in the wells was 50.8° C with a maximum temperature difference between any two wells of 2.9° C. The standard deviation was only 0.51° C, which is about 1% of the average temperature.

**Table 2**

| *Position* | 1 | 2 | 3 | 4 | 5 | 6 | 7 | 8 | 9 | 10 | 11 | 12 |
|---|---|---|---|---|---|---|---|---|---|---|---|---|
| A | 49.9 | 50.2 | 50.8 | 50.4 | 50.8 | 50.5 | 50.7 | 50.7 | 50.4 | 50.5 | 50.2 | 49.9 |
| B | 50.5 | 50.6 | 50.8 | 51.1 | 51.4 | 50.9 | 51.1 | 51.1 | 51.5 | 50.8 | 50.4 | 50.2 |
| C | 50.1 | 50.8 | 50.8 | 51 | 51.2 | 50.8 | 50.4 | 51 | 50.8 | 50.8 | 50.4 | 50 |
| D | 49.9 | 51 | 51.1 | 51.1 | 51.1 | 51.2 | 51.4 | 51.2 | 51.1 | 51 | 51.1 | 49.9 |
| E | 50.5 | 51.2 | 51.2 | 51.3 | 51.3 | 51.3 | 51.5 | 51.2 | 50.8 | 50.8 | 50.6 | 49.6 |
| F | 49.9 | 51.4 | 51.2 | 51.4 | 51.7 | 51.6 | 51.3 | 51.3 | 51.2 | 50.7 | 50.8 | 50 |
| G | 49.9 | 51.3 | 50.8 | 51.5 | 51.3 | 51.4 | 50.8 | 51.2 | 51.4 | 51.1 | 50.8 | 50.3 |
| H | 48.8 | 50.4 | 50.5 | 50.6 | 50.8 | 50.8 | 50.4 | 50.8 | 50.3 | 50.6 | 50.5 | 50 |

Example 3:

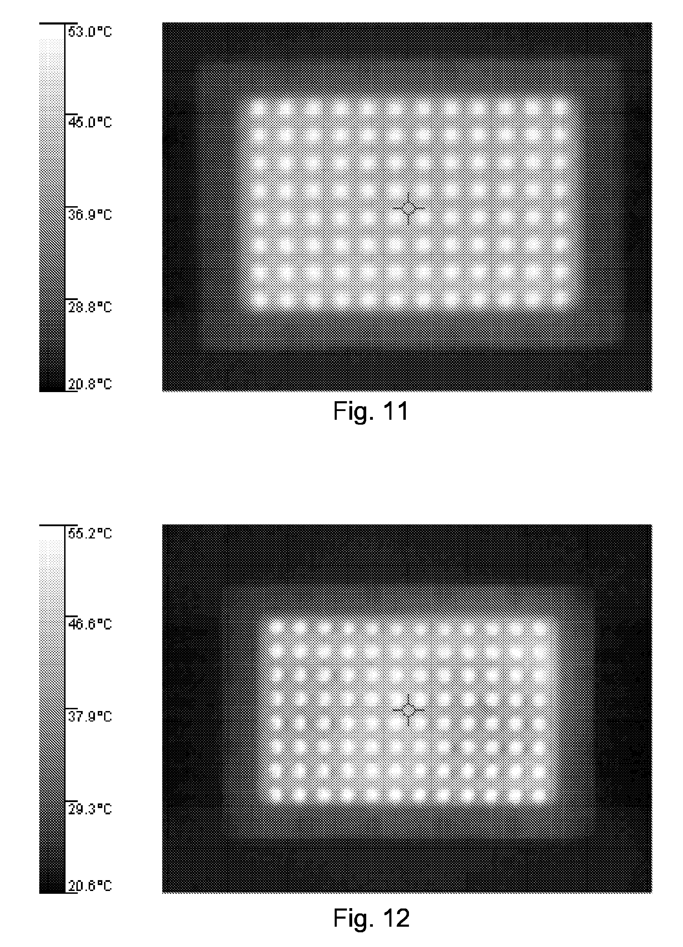

Figure 11 is the infrared image for the same conditions but using 150 milliliters of tap water as the microwave moderating fluid. Table 3 presents the same data in numerical form and indicates that the average temperature was 52.3° C with a temperature differential of 2.0° C degrees centigrade between the extremes. The standard deviation was 0.37° C which represents only about 0.7% of the average temperature.

**Table 3**

| *Position* | 1 | 2 | 3 | 4 | 5 | 6 | 7 | 8 | 9 | 10 | 11 | 12 |
|---|---|---|---|---|---|---|---|---|---|---|---|---|
| A | 51.4 | 51.8 | 52.1 | 52.1 | 51.8 | 51.7 | 51.6 | 51.8 | 51.4 | 51.7 | 51.5 | 51 |
| B | 52.1 | 52.7 | 52.6 | 52.5 | 52.3 | 52.6 | 52.6 | 52.5 | 52.3 | 52.3 | 52.5 | 52 |
| C | 52.1 | 52.8 | 52.6 | 52.6 | 52.2 | 52.2 | 52.2 | 52.5 | 52.3 | 52.3 | 52.3 | 52 |
| D | 51.8 | 52.6 | 52.4 | 52.7 | 52.1 | 52.8 | 52.8 | 52.6 | 52.4 | 52.2 | 52 | 51.7 |
| E | 52 | 52.5 | 52.5 | 52.6 | 52.4 | 52.6 | 52.5 | 52.4 | 52.5 | 52.3 | 52.4 | 52 |
| F | 51.9 | 52.6 | 52.5 | 52.8 | 52.6 | 52.5 | 52.3 | 52.3 | 52.4 | 52.1 | 52.3 | 52.2 |
| G | 52.1 | 52.7 | 52.9 | 53 | 52.6 | 52.5 | 52.7 | 52.5 | 52.8 | 52.4 | 52.3 | 52 |
| H | 51.8 | 52.2 | 52.4 | 52.5 | 52.6 | 52.7 | 52.5 | 52.6 | 52.5 | 52.5 | 52 | 51.5 |

Example 4:

Figure 12 is the infrared image of a microtiter plate according to the invention using 150 milliliters of 10 by weight percent sodium chloride (NaCl) as the microwave moderating fluid. Table 4 presents the same data in numerical format and shows that the average temperature was 54.4° C with a temperature differential between extremes of 2.2° C. The standard deviation was 0.42° C which represents only about 0.8% of the average temperature.

**Table 4**

| *Position* | 1 | 2 | 3 | 4 | 5 | 6 | 7 | 8 | 9 | 10 | 11 | 12 |
|---|---|---|---|---|---|---|---|---|---|---|---|---|
| A | 53.5 | 53.8 | 53.9 | 53.7 | 53.7 | 53.4 | 53.6 | 53.7 | 53.5 | 54.1 | 54.1 | 54.2 |
| B | 54.3 | 54.4 | 54.5 | 54.9 | 54.7 | 54.3 | 54.4 | 54 | 54.1 | 54.4 | 54.9 | 54.3 |
| C | 53.7 | 54.2 | 54.3 | 54.5 | 54.3 | 54.3 | 54.1 | 54.5 | 54.5 | 54.6 | 54.7 | 54.3 |
| D | 52.9 | 54.5 | 54.5 | 54.5 | 54.3 | 54.8 | 55 | 54.6 | 54.4 | 54.3 | 54.4 | 54 |
| E | 53.7 | 54.3 | 53.9 | 54.5 | 54.7 | 54.8 | 54.7 | 54.2 | 54.2 | 53.8 | 54.5 | 54 |
| F | 54 | 54.5 | 54.4 | 54.9 | 54.4 | 54.7 | 54.3 | 54.5 | 54.4 | 53.8 | 54.5 | 54.4 |
| G | 54.5 | 54.8 | 54.4 | 54.9 | 55 | 54.9 | 54.8 | 54.8 | 54.6 | 54.4 | 54.9 | 54.3 |
| H | 54 | 54.8 | 54.8 | 54.8 | 54.9 | 55.1 | 55 | 54.8 | 54.7 | 54.6 | 54.7 | 54.5 |

Example 5

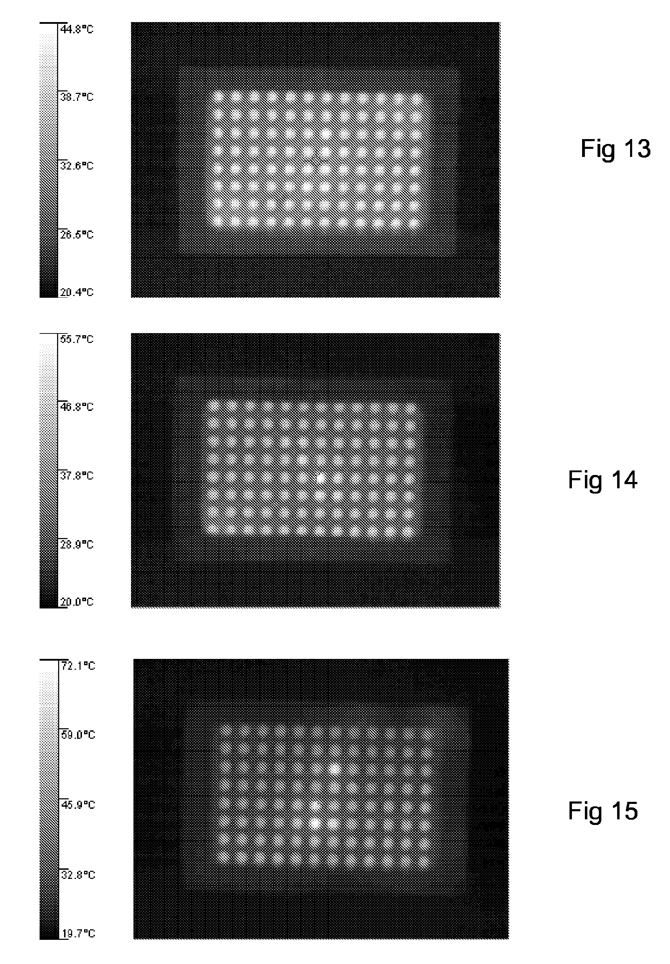

Figure 13 represents an experiment in which toluene, a less polar liquid, was used as the fluid in the chamber. In Figure 13, 70 milliliters of toluene was included and each well included 100 microliters of a 100 mM ammonium bicarbonate solution.

Table 5 presents the same data in numerical format and shows that the fluid temperature was 40° C, the average temperature in the wells was 41.6° C, the difference between the highest and lowest temperature wells was 4.7° C, the standard deviation was 0.87° C, and represented 2.1 percent of the average temperature.

**Table 5**

| Position | 1 | 2 | 3 | 4 | 5 | 6 | 7 | 8 | 9 | 10 | 11 | 12 |
|---|---|---|---|---|---|---|---|---|---|---|---|---|
| A | 40.8 | 40.7 | 40.5 | 40.6 | 40.6 | 40.8 | 40.7 | 40.9 | 40.6 | 40.4 | 40.7 | 40.1 |
| B | 40.5 | 40.5 | 40.5 | 40.6 | 40.7 | 40.9 | 41.1 | 40.8 | 40.6 | 40.8 | 40.7 | 40.3 |
| C | 40.7 | 41 | 41.1 | 41 | 41.1 | 42 | 43.9 | 41.3 | 40.8 | 40.8 | 40.9 | 40.8 |
| D | 41.3 | 41.5 | 41.3 | 41.3 | 42 | 42.5 | 43.7 | 43.1 | 41.4 | 41.4 | 41.1 | 40.9 |
| E | 41.6 | 41.7 | 41.6 | 41.5 | 42.7 | 43.6 | 43.3 | 42.6 | 41.5 | 41.4 | 41.7 | 41.4 |
| F | 41.6 | 41.6 | 42 | 41.7 | 42 | 44.8 | 43.7 | 41.7 | 41.5 | 41.8 | 41.8 | 41.5 |
| G | 42.1 | 42 | 41.8 | 41.8 | 41.5 | 41.9 | 42 | 41.8 | 41.9 | 42.1 | 42.2 | 41.7 |
| H | 42.1 | 42.4 | 42 | 42 | 41.9 | 42 | 42 | 42.3 | 42.4 | 42.5 | 42.4 | 42.2 |

Example 6

Figure 14 represents the same experiment as Example 5, but with the IR image taken immediately upon completion of the application of microwaves.

Table 6 presents the same data in numerical format and shows that the fluid temperature was 40° C, the average temperature in the wells was 45.7° C, the difference between a highest and lowest temperature in the wells was 13.1° C, and the standard deviation was 2.03° C, which represented 4.4 percent of the average temperature.

**Table 6**

| Position | 1 | 2 | 3 | 4 | 5 | 6 | 7 | 8 | 9 | 10 | 11 | 12 |
|---|---|---|---|---|---|---|---|---|---|---|---|---|
| A | 45.4 | 44.3 | 43.4 | 43 | 42.7 | 42.6 | 42.8 | 42.9 | 43 | 43 | 43.1 | 43.3 |
| B | 44 | 44 | 43.6 | 44 | 44.1 | 44.5 | 44.1 | 44.2 | 44.1 | 43.9 | 43.9 | 43.6 |
| C | 44 | 44.2 | 44.4 | 44.8 | 47.6 | 47.1 | 45.3 | 44.8 | 44.8 | 44.8 | 44.7 | 44.1 |
| D | 44.4 | 44.4 | 44.8 | 45 | 47.1 | 50.8 | 47.1 | 46.9 | 45.8 | 45.6 | 45 | 44.7 |
| E | 44.7 | 45 | 45.2 | 45.5 | 45.9 | 47.3 | 55.7 | 50.1 | 46.5 | 46.2 | 45.7 | 45.4 |
| F | 45 | 45.2 | 45.9 | 45.7 | 45.7 | 46.7 | 51.5 | 49.9 | 46.5 | 45.8 | 46.1 | 45.8 |
| G | 45.4 | 45.5 | 46.2 | 46.2 | 46.1 | 46.4 | 46.6 | 46.6 | 46.6 | 46.3 | 46.8 | 46.5 |
| H | 46.6 | 46.7 | 46.7 | 46.7 | 46.9 | 47.4 | 47.9 | 48.6 | 48.2 | 47.9 | 47.7 | 47.5 |

Example 7

Figure 15 represents an experiment in which 25 ml of toluene was used as the microwave-moderating fluid in the chamber. Each well again included 100 microliters of 100 mM ammonium bicarbonate solution in each well

Table 7 presents the same data in numerical format and shows that the average temperature in the wells was 48.1° C, the difference between the highest and lowest temperature wells was 31.6° C, and the standard deviation was 5.6° C, which represented 11 percent of the average temperature.

**Table 7**

| Position | 1 | 2 | 3 | 4 | 5 | 6 | 7 | 8 | 9 | 10 | 11 | 12 |
|---|---|---|---|---|---|---|---|---|---|---|---|---|
| A | 42 | 42 | 41.6 | 41.9 | 41 | 41 | 40.8 | 40.7 | 40.5 | 40.5 | 40.8 | 41.8 |
| B | 42.4 | 42.1 | 42.4 | 42.6 | 42.9 | 44.4 | 45.9 | 43.1 | 41.6 | 41.3 | 42.3 | 43.2 |
| C | 44.2 | 43.3 | 43.2 | 43.9 | 45.1 | 50.2 | 67 | 48 | 43.5 | 43.5 | 44.5 | 45.4 |
| D | 46 | 45 | 44.8 | 45.9 | 48.3 | 49.7 | 54.2 | 51.2 | 45.7 | 45.8 | 46.7 | 47.8 |
| E | 48 | 47 | 46.9 | 48.1 | 53 | 64.9 | 53.2 | 49.8 | 48.3 | 48.6 | 49.1 | 50 |
| F | 48.9 | 48.9 | 48.7 | 49.6 | 56.7 | 72.1 | 64.1 | 51.3 | 49.9 | 50.4 | 50.7 | 51 |
| G | 50.7 | 50.6 | 50.5 | 50.8 | 52 | 54.6 | 52.5 | 51 | 50.9 | 51.3 | 51.6 | 51.1 |
| H | 50.7 | 51.9 | 51.8 | 50.8 | 50 | 49 | 49.3 | 50.7 | 51.2 | 50.7 | 49.8 | 49.7 |

Example 8:

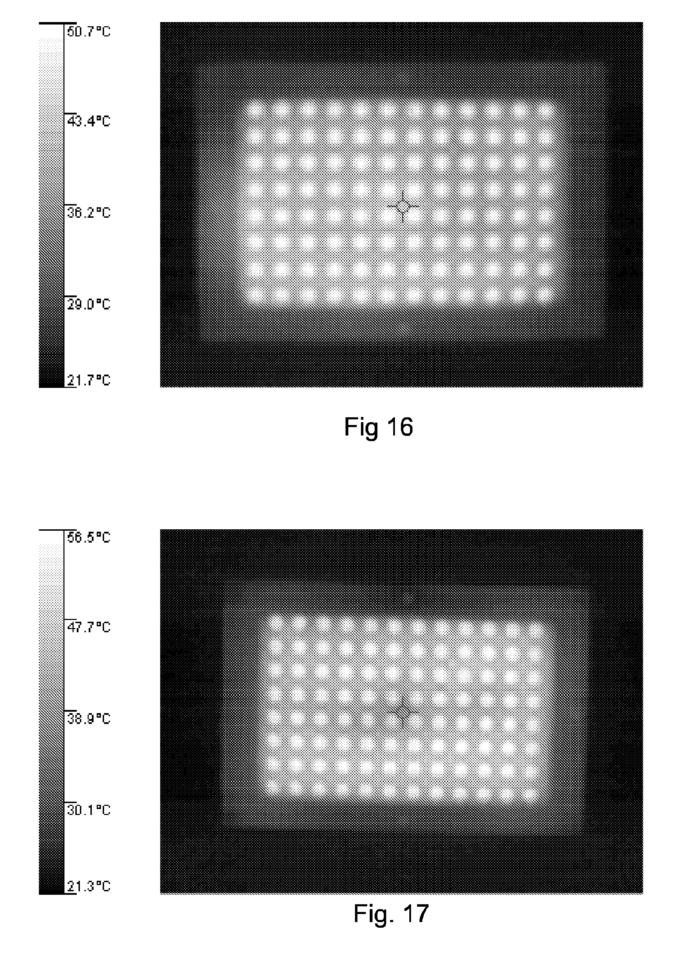

This example used 70 milliliters of a 10 percent by weight sodium chloride (NaCl) solution was as the microwave-moderating fluid in the microtiter plate; i.e., enough to contact the wells. Each well included 100 microliters of a 100 millimolar (mM) ammonium bicarbonate solution (NH₄HCO₃). Figure 16 represents the resulting thermal image.

Table 8 summarizes the data and shows that the fluid temperature was 51°C, the average temperature in the wells was 49.4°C, and the standard deviation among the 96 wells was 0.72°C which represented 1.4 percent of the average temperature. The largest temperature difference between any two wells was 3.2°C.

**Table 8**

| Position | 1 | 2 | 3 | 4 | 5 | 6 | 7 | 8 | 9 | 10 | 11 | 12 |
|---|---|---|---|---|---|---|---|---|---|---|---|---|
| A | 47.6 | 48.3 | 48.5 | 48.4 | 48.6 | 48.6 | 48.6 | 48.1 | 48.3 | 48.3 | 48.1 | 47.5 |
| B | 48.7 | 49.3 | 49.3 | 49.5 | 49.7 | 49.4 | 49.6 | 49.1 | 49 | 49.3 | 49.3 | 48.2 |
| C | 49.6 | 49.8 | 50 | 49.7 | 49.9 | 50.2 | 49.3 | 49.2 | 49.3 | 49.6 | 49.4 | 48.5 |
| D | 49.4 | 49.9 | 50.1 | 50.1 | 50 | 50.6 | 50.3 | 49.3 | 49.3 | 49.1 | 49.3 | 48.1 |
| E | 50 | 50.3 | 49.9 | 50 | 50 | 50.7 | 50 | 49.6 | 49.4 | 48.9 | 49.6 | 48.3 |
| F | 49.9 | 50.2 | 50 | 50 | 50.2 | 50.2 | 49.5 | 49.7 | 49.5 | 49.3 | 49.2 | 48.3 |
| G | 49.5 | 50 | 50.3 | 50 | 50.2 | 50.2 | 50.1 | 50 | 49.8 | 49.5 | 49.4 | 48.3 |
| H | 48.8 | 49.4 | 49.3 | 50 | 49.9 | 49.9 | 49.7 | 49.4 | 49.3 | 49 | 48.6 | 47.5 |

Example 9:

Figure 17 is an image representing the same experiments as Example 8, but with only 25 milliliters of the 10 percent NaCl solution used as the microwave moderating fluid; i.e., less than an amount that would conductively touch or heat the wells. Table 9 summarizes the data and shows an average temperature in the wells of 53.8° C, a standard deviation of 1.5° C degrees centigrade over the 96 wells (representing 2.8 percent of the average temperature) and a maximum temperature difference between any two wells of 7.4° C.

**Table 9**

| Position | 1 | 2 | 3 | 4 | 5 | 6 | 7 | 8 | 9 | 10 | 11 | 12 |
|---|---|---|---|---|---|---|---|---|---|---|---|---|
| A | 50.3 | 51.5 | 51.4 | 51.5 | 51 | 52.3 | 53.1 | 52.4 | 52.8 | 52.8 | 52.7 | 50.9 |
| B | 52.2 | 54.3 | 54.3 | 54.6 | 54.7 | 54.7 | 54.6 | 53.6 | 55 | 55.8 | 55.3 | 53 |
| C | 53.5 | 54.7 | 55 | 55.4 | 55.2 | 54.8 | 54.3 | 54.4 | 54.6 | 55.4 | 55.4 | 54 |
| D | 53.3 | 54.2 | 53.9 | 54.6 | 52.9 | 50.4 | 51.2 | 54 | 54.2 | 53.8 | 54.9 | 53.8 |
| E | 51.7 | 54.2 | 53.1 | 52.3 | 50.5 | 49.1 | 50.8 | 54 | 54.7 | 55 | 55.6 | 53.5 |
| F | 53.7 | 55.2 | 54.9 | 54.3 | 54 | 54.4 | 54.8 | 55.6 | 56.1 | 56.5 | 55.6 | 53.5 |
| G | 53.9 | 55.7 | 55.8 | 55.4 | 55.6 | 55.3 | 55.4 | 55.6 | 55.5 | 55.6 | 55.6 | 53 |
| H | 52.2 | 53 | 52.8 | 53 | 53.5 | 53.3 | 53.1 | 53.8 | 53.6 | 53.6 | 53.4 | 52.1 |

In the drawings and specification there has been set forth a preferred embodiment of the invention, and although specific terms have been employed, they are used in a generic and descriptive sense only and not for purposes of limitation, the scope of the invention being defined in the claims.

## Claims

1. A system for microwave assisted high-throughput chemical processes, said system comprising:
a source of microwave radiation;
a microwave cavity in communication with said source;
a microtiter plate formed of a microwave transparent material in said cavity and including a plurality of sample wells;
a fluid chamber defined by at least the interior of the four walls and the base of said microtiter plate; and
a microwave-moderating fluid in said chamber that helps produce a more uniform microwave field among the individual wells in said microtiter plate when microwaves are applied in said cavity from said source.

2. A microwave system according to Claim 1 further comprising means for proactively cooling said microtiter plate during the application of microwaves.

3. A microwave system according to Claim 2 wherein said cooling means is a contact cooling device.

4. A microwave system according to Claim 2 or 3 wherein said cooling means directs a flow of cooling gas across and against said microtiter plate in said cavity.

5. A microwave system according to any preceding Claim further comprising a temperature detector positioned to measure temperatures selected from the group consisting of temperatures of compositions in said microtiter plate and the temperature of said microwave-moderating fluid.

6. A microwave system according to Claim 5 further comprising a processor in communication with said microwave source, said temperature detector, and said cooling means, for controlling said source in response to a measured temperature.

7. A microwave system according to Claims 1 - 6 wherein said microwave moderating fluid comprises water.

8. A microwave system according to Claims 1 - 6 wherein said microwave moderating fluid is an ionic solution.

9. A microwave system according to Claims 1 - 8 wherein said microtiter plate includes means for circulating said microwave moderating fluid around said wells.

10. A microwave system according to Claim 9 wherein said circulating means is a magnetic stirrer.

11. A microwave system according to Claims 1 - 10 wherein said chamber is filled with said fluid and said fluid contacts the exterior surfaces of said wells.

12. A microwave system according to Claim 1 - 10 wherein said chamber is partially filled with an amount of said fluid that avoids contacting the exterior surfaces of said wells.

13. A microwave system according to any preceding Claim comprising a 96 well microtiter plate.

14. A microwave system according to Claims 1 - 12 wherein said microtiter plate is selected from the group consisting of a 384 well microtiter plates and 1536 well microtiter plates.

15. A microwave system according to Claims 1 - 14 wherein said fluid chamber is defined by the profiles of said wells, the interior of said four walls, said base, and the top surface of said microtiter plate.

16. A method of microwave assisted high-throughput chemistry comprising:
applying microwave energy to a plurality of compositions in a plurality of sample wells in a multiple well plate;
while moderating the microwaves by circulating a liquid in a portion of the plate that is beneath the wells and segregated from the compositions in the wells and that couples differently than the compositions in the wells couple with the applied microwave frequencies.

17. A method according to Claim 16 wherein the step of applying the microwave energy comprises directing energy from a microwave source into a microwave cavity that holds the multiple well plate.

18. A method according to Claim 16 or 17 comprising applying microwave energy at a frequency of between about 300 megahertz and 3 gigahertz.

19. A method according to Claim 16 or 17 comprising applying microwave energy at a frequency of 2450 megahertz.

20. A method according to Claim 16 or 17 comprising moderating the microwaves by circulating water.

21. A method according to Claims 16 - 19 comprising moderating the microwaves by circulating an ionic solution.

22. A method according to Claims 16 - 21 further comprising monitoring the temperature of the circulating fluid and moderating the application of microwave energy in response to the monitored temperature.

23. A method according to Claims 16 - 22 further comprising monitoring the temperature of one or more of the compositions in the wells and moderating the application of microwave energy in response to the monitored well temperature.

24. A method according to Claims 16 - 23 further comprising controlling the temperature of the circulating liquid by directing a cooling gas flow across and against the multiple well plate.

25. A method according to Claims 16 - 23 further comprising controlling the temperature of the compositions in the wells by directing a cooling gas flow across and against the multiple well plate.

26. A method according to Claim 24 comprising directing the cooling gas flow in response to the monitored temperature selected from the group consisting of the temperature of the circulating fluid and the temperature of the compositions in one or more of the wells.

27. A method according to Claim 25 comprising directing the cooling gas flow in response to the monitored temperature selected from the group consisting of the temperature of the circulating fluid and the temperature of the compositions in one or more of the wells.

28. A method according to Claims 16 - 27 comprising applying the microwave energy to a plurality of compositions in at least 96 wells in a microtiter plate.

29. A method according to Claims 16 - 27 comprising applying the microwave energy to a plurality of compositions in at least 384 wells in a microtiter plate.

30. A method according to Claims 16 - 27 comprising applying the microwave energy to a plurality of compositions in at least 1536 wells in a microtiter plate.

31. A method according to Claims 16 - 30 wherein the step of circulating the liquid in the cavity comprises filling a chamber in the multiple well plate that is adjacent the multiple wells with the microwave-moderating liquid.
